# EUROPÄISCHE PATENTSCHRIFT

(11) **EP 1 749 374 B1**
(45) Veröffentlichungstag und Bekanntmachung des Hinweises auf die Patenterteilung: **10.09.2008**
(21) Anmeldenummer: 05757388.3
(22) Anmeldetag: 26.05.2005
(51) Int. Cl.: H04L 12/28, H04Q 7/38

(54) **NAHTLOSES WEITERREICHEN IN EINEM DRAHTLOSEN LOKALEN NETZWERK**
SMOOTH HANDOVER IN A WIRELESS LOCAL AREA NETWORK
TRANSFERT SANS FIL DANS UN RESEAU LOCAL SANS FIL

(30) Priorität: 27.05.2004 DE 102004026495
(43) Veröffentlichungstag der Anmeldung: 07.02.2007
(73) Patentinhaber: Aastra DeTeWe GmbH, 10997 Berlin (DE); IHP GmbH, 15236 Frankfurt an der Oder (DE)
(72) Erfinder: BECKER, Thomas, 13467 Berlin (DE); KRAUSE, Frank-Michael, 12437 Berlin (DE); METHFESSEL, Michael, 15230 Frankfurt (Oder) (DE); TITTELBACH-HELMRICH, Klaus, 15234 Frankfurt (Oder) (DE); LUNN, Andrew, Stuart, CH-5504 Othmarsingen (CH)
(74) Vertreter: Ninnemann, Detlef
(86) Internationale Anmeldenummer: PCT/DE2005/000974
(87) Internationale Veröffentlichungsnummer: WO 2005/117350

(56) Entgegenhaltungen:
- EP-A- 1 398 912
- WO-A-03/039054
- US-A1- 2002 191 561
- US-B1- 6 332 077
- US-B1- 6 587 680

## Beschreibung

Die Erfindung bezieht sich auf ein Verfahren mit den Merkmalen gemäß dem Oberbegriff des Anspruchs 1.

Ein derartiges Verfahren ist beispielsweise von WLAN (Wireless Local Area Network)-Systemen bekannt. Bei diesem vorbekannten Verfahren wird eine Datenverbindung zwischen einer Basisstation und einer oder mehreren Mobilstationen betrieben, indem innerhalb von Übertragungsphasen Datenpakete zwischen der Basisstation und den Mobilstationen übertragen werden. Die Übertragungsphasen können bei WLAN-Systemen durch "contention-free"-Perioden gebildet sein. Der Beginn jeder Übertragungsphase wird jeweils durch die Abgabe eines StartSignals, das anschaulich auch als Beacon-Signal bezeichnet werden kann, angezeigt; nach Abgabe des Beacon-Signals wird die Luftschnittstelle zwischen der Basisstation und den Mobilstationen für die jeweilige Übertragungsphase von der Basisstation belegt bzw. verwaltet. Innerhalb jeder Übertragungsphase werden die Mobilstationen von der Basisstation angesprochen und zum Austausch von Datenpaketen aufgerufen. Nach Abschluss einer jeden Übertragungsphase schließt sich jeweils eine Übertragungspause an, in der keine von der Basisstation kontrollierte bzw. verwaltete Übertragung von Datenpaketen zwischen der Basisstation und den Mobilstationen stattfindet. Da in diesen Übertragungspausen die Luftschnittstelle von der Basisstation nicht verwaltet wird, können in diesen Übertragungspausen beliebige andere Geräte auf die Luftschnittstelle zugreifen. Die Übertragungspausen werden demgemäß bei WLAN-Verbindungen auch als "contention"-Periode bezeichnet. Bei WLAN-Netzen erfolgt das Senden der Beacon-Signale durch die Basisstation in regelmäßigen Zeitabständen, beispielsweise alle 10,24 ms, so dass alle 10,24 ms eine neue Übertragungsphase gebildet wird.

Neuere WLAN Systeme, beispielweise solche nach dem IEEE 802.11e-Standard, bieten die Möglichkeit, eine Dienstqualität (Quality of Service, QoS) zu garantieren. Dies wird erreicht, indem die WLAN Basisstation - üblicherweise auch als Access Point bzw. kurz als "AP" bezeichnet - mittels eines Zeitmultiplexverfahrens den ihr zugeordneten Mobilstationen die benötigte Bandbreite zuteilt. Diese QoS-Unterstützung erlaubt es, Telephonie mit der Qualität bestehender DECT-Systeme (Digital European Cordless Telephone) über WLAN zu erhalten, solange die jeweilige Mobilstation mit derselben Basisstation verbunden bleibt. Die QoS-Unterstützung selbst baut auf der HCF (hybrid coordination function) des 8021.11e-Standards in geradliniger Weise auf.

Bei derartigen Verfahren besteht das Problem, dass eine Mobilstation ihre Basisstation gegebenenfalls wechseln, also von der ursprünglichen Basisstation zu einer anderen Basisstation umschalten muss, beispielsweise, wenn sich die Übertragungsqualität (z. B. Signalstärke, Signal-RauschVerhältnis, Bitfehlerrate, usw.) im Hinblick auf die ursprüngliche Basisstation verschlechtert hat. Dieses wird als Hand-Over-Vorgang bezeichnet. Die Übertragungsqualität soll während der Hand-Over-Vorgänge nicht, zumindest nicht wesentlich, beeinträchtigt werden, so dass der Hand-Over-Vorgang für die Nutzer der Verbindung - beispielsweise im Falle einer Telefonverbindung für die Telefongesprächspartner - möglichst unmerklich ist.

Aus der EP 1 398 912 A1 ist ein System zur Durchführung von Hand-Over-Vorgängen bekannt (bezeichnet als Roaming System), mit dem eine Mobilstation von einer Basisstation zu einer anderen Basisstation weitergeschaltet werden kann, ohne dass die Kommunikation zwischen der Mobilstation und den Basisstationen unterbrochen wird. Dieses wird erreicht, indem die Mobilstation entweder eine aktive Suchoperation nach Vollendung einer durch eine "contention-free"-Periode ausgebildeten Übertragungsphase, in der auf aktive Weise mittels Übersendung eines Probesignals die Übertragungsqualität zu anderen Basisstationen ermittelt wird, oder eine passive Suchoperation, bei der entweder nach einer Übertragungsphase oder, wenn das mobile Endgerät während einer Übertragungsphase nicht kommuniziert, auch während einer Übertragungsphase auf passive Weise Signale anderer Basisstationen mitgehört werden, durchführt.

Bei der EP 1 398 912 A1 erfolgt die Suche nach anderen Basisstation somit vorwiegend außerhalb der regulär vorgesehenen Übertragungsphasen, insbesondere in den Pausen zwischen zwei Übertragungsphasen zwischen zwei aufeinanderfolgenden Beacon-Signalen. Bei der aktiven Suchoperation ist hierzu die Übersendung eines separaten Probesignals erforderlich, mittels dessen die Übertragungsqualität zu den anderen Mobilstation ermittelt wird.

Aus der US 2002/0191561 A1 gehen ein Verfahren und eine Vorrichtung hervor, mittels derer bei einem drahtlosen Kommunikationssystem mittels so genannter Schattenadressen ein Hand-Over einer Mobilstation von einem ersten Subnetz in ein zweites Subnetz ermöglicht wird.

Der Erfindung liegt die Aufgabe zugrunde, ein Verfahren anzugeben, das es ermöglicht, dass Mobilstationen nahtlose ("seamless") Hand-Over-Vorgänge zu anderen Basisstationen durchführen können.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass jede Mobilstation eine Datenpaketübertragung ausschließlich in jeder m-ten Übertragungsphase durchführt, wobei "m" eine natürliche Zahl größer als "1" bezeichnet, und nach erfolgter Datenpaketübertragung für zumindest eine nachfolgende Übertragungsphase von der Datenpaketübertragung ausgelassen wird. Wenn die Mobilstationen einen Hand-Over-Vorgang vorbereiten wollen, schalten sie außerhalb der zur Datenpaketübertragung mit der Basisstation genutzten Übertragungsphasen in eine Mithörphase. In dieser Mithörphase wird der Funkverkehr - insbesondere auf anderen Frequenzen als der Übertragungsfrequenz der zugeordneten Basisstation - abgehört, und es wird nach einer zur Datenpaketübertragung geeigneten, anderen (neuen) Basisstation gesucht.

Ein wesentlicher Vorteil des erfindungsgemäßen Verfahrens besteht darin, dass bei diesem für die Mobilstationen gezielt Zeitfenster geschaffen werden, in denen die Mobilstationen einen Hand-Over-Vorgang bei Bedarf vorbereiten können. Dies wird erfindungsgemäß dadurch erreicht, dass jede Mobilstation nicht in jeder von der Basisstation "bereitgestellten" Übertragungsphase Datenpakete übertragen muss, sondern stattdessen davon regelmäßig für zumindest eine Übertragungsphase "befreit" wird. Durch das gezielte Auslassen von Übertragungsphasen wird ein zeitlicher Spielraum geschaffen, in dem die Mobilstationen den Funkverkehr auf anderen Frequenzen mithören können und andere, zur Datenübertragung besser geeignete Basisstationen auffinden können.

Ein weiterer Vorteil des erfindungsgemäßen Verfahrens ist darin zu sehen, dass dieses bei allen realzeitkritischen Datenströmen, insbesondere beispielsweise bei Audio- (z. B. nach dem "DECT"-Standard gebildeten Audio-Daten) oder Video-Datentrömen, die über WLAN übertragen werden, einen quasi unterbrechungsfreien Hand-Over-Vorgang ermöglicht.

Vorzugsweise schließt sich an jede Übertragungsphase jeweils eine Übertragungspause an, in der keine Datenpaketübermittlung zur Nutzdatenübertragung stattfindet.

Als vorteilhaft wird es angesehen, wenn die Mobilstationen im Falle des Vorhandenseins einer geeigneten anderen Basisstation zur Vorbereitung des Hand-Over-Vorgangs eine parallele Verbindung mit der anderen Basisstation aufbauen, wobei für die parallele Verbindung Zeitfenster genutzt werden, die außerhalb der zur Datenpaketübermittlung mit der ursprünglichen Basisstation genutzten Übertragungsphasen liegen. Durch den Aufbau einer zwischenzeitlichen Parallelverbindung wird sichergestellt, dass ein Verlust von Datenpaketen beim Hand-Over-Vorgang vermieden wird.

Vorzugsweise arbeiten die beiden Basisstationen mit unterschiedlichen Übertragungsfrequenzen. Die Beacon-Signale der beiden Basisstationen können zueinander asynchron sein.

Bevorzugt werden die Beacon-Signale der beiden Basisstationen jeweils äquidistant erzeugt.

Das Verfahren kann beispielsweise nach dem eingangs beschriebenen WLAN-Standard durchgeführt werden; die Basisstationen werden demgemäß jeweils durch WLAN-Access-Points (AP's) gebildet. Nach der Abgabe der Beacon-Signale wird die Luftschnittstelle für den jeweiligen Frequenzbereich somit jeweils unter Bildung einer "Contention-free"-Periode belegt; zwischen den Übertragungsphasen wird die Luftschnittstelle im jeweiligen Frequenzbereich für "Contention"-Perioden freigegeben. Das Ende jeder Übertragungsphase kann beispielsweise jeweils durch die Abgabe eines "Contention-free-Ende-Signales" von der Basisstation angezeigt werden.

Erfindungsgemäß ist vorgesehen, dass das Auslassen bzw. das Nutzen der Übertragungsphasen kontinuierlich derart erfolgt, dass jede Mobilstation eine Datenpaketübertragung ausschließlich in jeder m-ten Übertragungsphase durchführt, wobei "m" eine natürliche Zahl größer als "1" bezeichnet. Besonders vorteilhaft ist es, wenn jede Mobilstation eine Datenpaketübertragung ausschließlich in jeder zweiten Übertragungsphase durchführt.

Die für die parallele Verbindung genutzten Zeitfenster schließen vorzugsweise diejenigen Übertragungsphasen der ursprünglichen Basisstation ein, die bezüglich dieser Basisstation ausgelassen werden.

Nach erfolgtem Verbindungsaufbau mit der anderen Basisstation wird die parallele Verbindung mit der ursprünglichen Basisstation vorzugsweise beendet, um die Luftschnittstelle zu entlasten.

Sind an die Basisstation mehrere Mobilstationen angeschlossen, so wird es als vorteilhaft angesehen, wenn die Zuordnung der Mobilstationen zu den Übertragungsphasen, die zur Datenpaketübertragung mit der jeweiligen Basisstation genutzt werden, gleichmäßig erfolgt. Beispielsweise wird die Hälfte der Mobilstationen in allen "ungeraden" (erste, dritte, fünfte, usw.) Übertragungsphasen und die andere Hälfte der Mobilstationen in allen "geraden" (zweite, vierte, sechste, usw.) Übertragungsphasen zur Datenpaketübertragung herangezogen. Die Datenpakete sind dementsprechend jeweils derart zu "schnüren" bzw. zu bilden, dass trotz der Nutzung nur jeder zweiten Übertragungsphase empfängerseitig ein ununterbrochener, datenverlustfreier Empfangsdatenstrom gebildet werden kann; wird also nur jede zweite Übertragungsphase genutzt, so müssen die Datenpakete doppelt so groß sein bzw. doppelt so viele Nutzdaten umfassen, als dies bei einer Datenpaketübertragung in jeder Übertragungsphase nötig wäre.

Vorzugsweise wird der zeitliche Abstand zwischen zwei aufeinanderfolgenden Beacon-Signalen mindestens doppelt so groß wie die Länge der jeweils dazwischen liegenden Contention-free-Periode gewählt, wenn von den Mobilstationen jeweils jede "zweite" Übertragungsphase ausgelassen wird. Die zeitliche Länge der Mithörphase der Mobilstationen beträgt in diesem Falle bevorzugt mindestens das 1,5-fache des zeitlichen Abstands zwischen zwei aufeinanderfolgenden Beacon-Signalen.

Der zeitliche Abstand zwischen zwei Beacon-Signalen kann beispielsweise zwischen 5ms und 15ms betragen; bei WLAN-Verbindungen wird beispielsweise ein Abstand von 10,24 ms gewählt.

Die Erfindung bezieht sich außerdem auf eine Basisstation zum Betreiben einer Datenverbindung mit einer oder mehreren Mobilstationen.

Der Erfindung liegt bezüglich einer solchen Basisstation die Aufgabe zugrunde , zu ermöglichen, dass die zugeordneten Mobilstationen möglichst nahtlose ("seamless") Hand-Over-Vorgänge zu anderen Basisstationen durchführen können.

Diese Aufgabe wird erfindungsgemäß durch eine Basisstation zum Betreiben einer Datenverbindung zwischen einer Basisstation und einer oder mehreren Mobilstationen gelöst, wobei die Basisstation eine Basisstation-Steuereinrichtung aufweist, die derart ausgestaltet ist, dass sie innerhalb von Übertragungsphasen Datenpakete mit den Mobilstationen austauscht. Erfindungsgemäß ist die Basisstation **dadurch gekennzeichnet, dass** sie den Mobilstationen die Übertragungsphasen derart zuordnet, dass jede Mobilstation eine Datenpaketübertragung ausschließlich in jeder m-ten Übertragungsphase durchführt, wobei "m" eine natürliche Zahl größer als "1" bezeichnet, und nach erfolgter Datenpaketübertragung jeweils für zumindest eine nachfolgende Übertragungsphase von der Datenpaketübertragung ausgeschlossen bleibt.

Bezüglich der Vorteile der erfindungsgemäßen Basisstation sowie bezüglich vorteilhafter Ausgestaltungen der erfindungsgemäßen Basisstation wird auf die obigen Ausführungen im Zusammenhang mit dem erfindungsgemäßen Verfahren verwiesen.

Die Erfindung bezieht sich außerdem auf eine Mobilstation zum Betreiben einer Datenverbindung mit einer Basisstation.

Der Erfindung liegt bezüglich einer solchen Mobilstation die Aufgabe zugrunde, zu ermöglichen, dass diese möglichst nahtlose ("seamless") Hand-Over-Vorgänge zu anderen Basisstationen durchführen kann.

Diese Aufgabe wird erfindungsgemäß durch eine Mobilstation zum Betreiben einer Datenverbindung mit einer Basisstation, wobei die Mobilstation eine Mobilstation-Steuereinrichtung aufweist, die derart ausgestaltet ist, dass sie
- innerhalb von Übertragungsphasen Datenpakete mit der Basisstation austauscht, und
- außerhalb der zur Datenpaketübertragung mit der Basisstation genutzten Übertragungsphasen zur Vorbereitung eines Hand-Over-Vorgangs in eine Mithörphase schaltet, in der der Funkverkehr abgehört wird und nach einer zur Datenpaketübertragung geeigneten, anderen Basisstation gesucht wird.
Erfindungsgemäß ist hierbei vorgesehen, dass die Mobilstation-Steuereinrichtung
- eine Datenpaketübertragung ausschließlich in jeder m-ten Übertragungsphase durchführt, wobei "m" eine natürliche Zahl größer als "1" bezeichnet, und
- nach erfolgter Datenpaketübertragung jeweils zumindest eine nachfolgende Übertragungsphase zur Datenpaketübertragung auslässt.

Bezüglich der Vorteile der erfindungsgemäßen Mobilstation sowie bezüglich vorteilhafter Ausgestaltungen der erfindungsgemäßen Mobilstation wird auf die obigen Ausführungen im Zusammenhang mit dem erfindungsgemäßen Verfahren verwiesen.

Zur Erläuterung der Erfindung zeigen
- Figur 1: beispielhaft eine Anordnung mit elf erfindungsgemäßen Mobilstationen und drei erfindungsgemäßen Basisstationen, anhand der Anordnung wird das erfindungsgemäße Verfahren erläutert,
- Figur 2: den Übertragungsverlauf beispielhaft vor einem Hand-Over-Vorgang,
- Figur 3: den Übertragungsverlauf beispielhaft bei einem Hand-Over-Vorgang,
- Figur 4: den Übertragungsverlauf beispielhaft nach einem Hand-Over-Vorgang und
- Figur 5: beispielhaft einen Übertragungsvorgang im Detail.

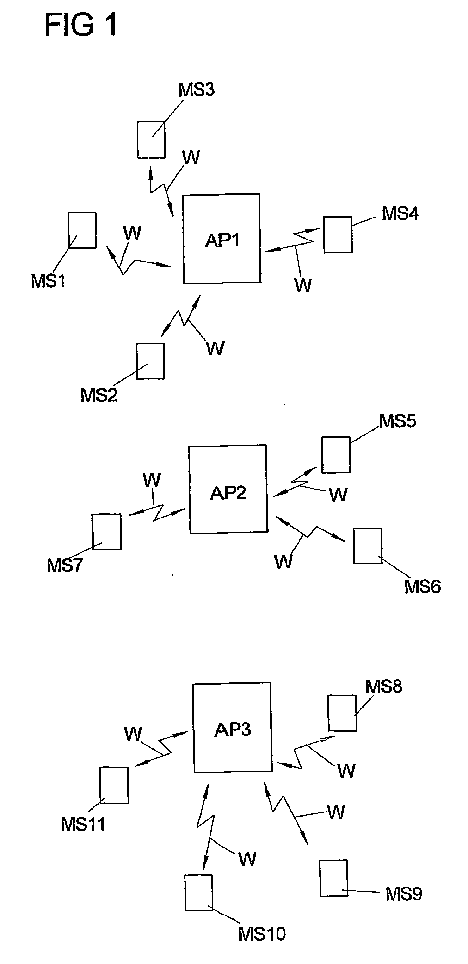

In der Figur 1 sieht man vier Mobilstationen MS1 bis MS4, die mit einem Access-Point AP1 in einer WLAN-Funkverbindung W stehen. In entsprechender Weise stehen drei Mobilstationen MS5 bis MS7 mit einem Access-Point AP2 und vier Mobilstationen MS8 bis MS11 mit einem Access-Point AP3 in einer WLAN-Funkverbindung W. Die WLAN-Funkverbindung W kann beispielsweise nach dem Standard IEEE 802.11 a, b oder g mit HCF-QoS-Erweiterungen nach IEEE 802.11e durchgeführt werden.

Wenn sich beispielsweise die Signalqualität bei der Datenverbindung zwischen der Mobilstation MS2 und dem Access-Point AP1 verringert, so muss die Mobilstation MS2 nach einem anderen Access-Point mit besserer Übertragungsqualität suchen und eine Verbindung mit diesem herstellen. Da verschiedenen Access-Points verschiedene Frequenzen zugeordnet sind, muss die Mobilstation MS2 versuchsweise auf eine andere Frequenz umstimmen, auf ein Beacon auf dieser Frequenz warten, und - falls eines gefunden wird - die zugehörige Signalqualität, beispielsweise die Signalstärke, registrieren. Durch Wiederholung dieses "Scan-Vorgangs" bei verschiedenen Frequenzen wird eine Tabelle von möglichen Access-Points aufgebaut, um dann den optimalen Access-Point als Ziel des Hand-Overs auszusuchen.

Problematisch ist nun, dass die Access-Points AP1 bis AP3 - im Gegensatz beispielsweise zu DECT-Basisstationen - nicht untereinander synchronisiert sind. Die Beacons (kurz für Beacon-Signale) der verschiedenen Access-Points stehen somit in beliebiger zeitlicher Position zueinander, obwohl sie jeweils dieselbe Beacon-Wiederholrate aufweisen. Beispielsweise können sich die Übertragungsphasen der Access-Points AP1 bis AP3 überlappen.

Da die Mobilstation MS2 die zeitliche Verschiebung der Beacon-Signale nicht kennen kann, muss sie - bei einem Beacon-Signalabstand von beispielsweise 10,24 ms - mindestens ca. 10 ms auf der jeweils neuen Frequenz lauschen, um ein mögliches Beacon-Signal abzufangen. Dieses könnte zu einem Unterbrechen des Datenstromes führen, weil in dem Zeitraum, in dem die Mobilstation MS2 auf eine andere Frequenz abgestimmt ist, keine Daten zu dem alten, ursprünglichen Access Point AP1 übertragen werden können.

Um ein solches Unterbrechen des Datenstromes zu verhindern, teilt jeder Access-Point AP1 bis AP3 die Übertragungsphasen so ein, dass jede zugeordnete Mobilstation nach jeder genutzten Übertragungsphase jeweils mindestens eine Übertragungsphase auslässt. Beispielsweise sendet und empfängt jede Mobilstation nur in jeder zweiten Periode Datenpakete.

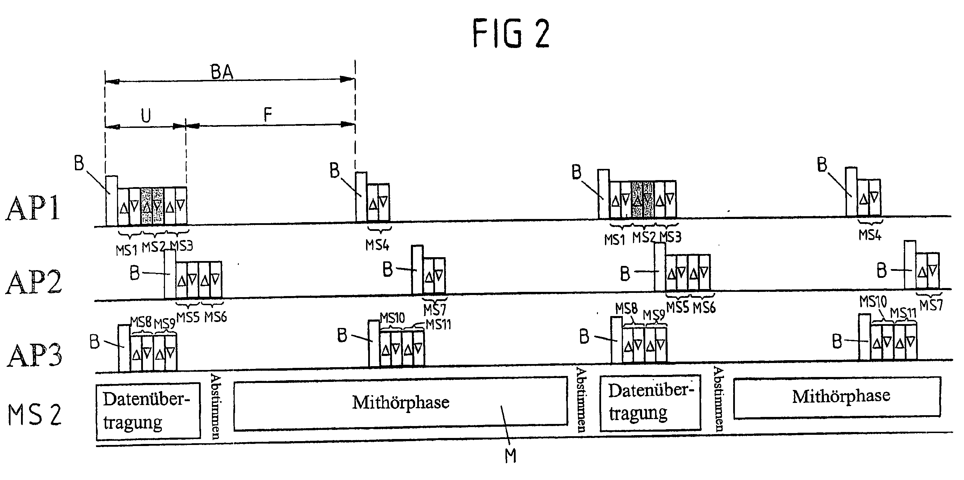

Dies zeigt beispielhaft die Figur 2, in der der Zeitverlauf der Datenpaketübertragung zwischen den Access-Points AP1 bis AP3 und den Mobilstationen MS1 bis MS11 dargestellt ist. Jeweils ein "Δ"-Zeichen stellt dabei eine Übertragung in Richtung Mobilstation und das jeweils um 180 Grad umgedrehte Zeichen eine Übertragung in Richtung Access-Point dar. Die Beacon-Signale sind mit dem Bezugszeichen B gekennzeichnet und weisen einen Beacon-Abstand BA von beispielsweise 10,24 ms auf.

Die durch die Beacon-Signale B getriggerte Übertragungsphase - bzw. "contention-free-Periode" - ist in der Figur 2 mit dem Bezugszeichen U markiert. An jede Übertragungsphase U schließt sich jeweils eine Übertragungspause ("contention-Periode") F an, in der die Luftstrecke für den jeweiligen Frequenzbereich freigegeben ist.

Da jede Mobilstation MS1 bis MS13 jeweils nur jede zweite Übertragungsphase nutzt, wird die Datenmenge pro Übertragungsphase jeweils - gegenüber einer "normalen" Übertragung in jeder Übertragungsphase - verdoppelt, um die benötigte mittlere Datenrate zu erhalten.

Wie sich in der Figur 2 erkennen lässt, sind die jedem Access-Point zugeordneten Mobilstationen vorzugsweise gleichmäßig auf die "geraden" und "ungeraden" Beacons bzw.

Übertragungsphasen verteilt, um eine gleichmäßige Auslastung der Übertragungsphasen zu erreichen.

Da nur jede zweite Übertragungsphase bezüglich des Access-Points AP1 genutzt wird, hat die Mobilstation MS2 zwischen den Datenübertragungen zu dem zugeordneten Access-Point AP1 genügend Zeit, um auf eine andere Frequenz umzustimmen, dort nach einem Beacon zu suchen, und rechtzeitig auf die alte Frequenz zurückzustimmen. Der zentrale Punkt ist, dass die Beaconperiode immer noch 10,24 ms beträgt, obwohl der Abstand zwischen den tatsächlich genutzten Übertragungsphasen - gegenüber einer "normalen" Nutzung aller Übertragungsphasen - verdoppelt ist.

Vorzugsweise ist der zeitliche Abstand zwischen zwei aufeinanderfolgenden Beacon-Signalen - hier 10,24 ms - mindestens doppelt so groß wie die Länge der jeweils dazwischen liegenden Contention-free-Periode U; dies bedeutet, dass die Übertragungsphasen maximal jeweils 5,12 ms dauern dürfen. Entsprechend kann die zeitliche Länge der Mithörphase M der Mobilstation MS2 das 1,5-fache des zeitlichen Abstands zwischen zwei aufeinanderfolgenden Beacon-Signalen betragen, also ca. 15 ms. Demnach muss in dieser Mithörphase von 15 ms mindestens ein Beacon auf der neuen Frequenz erkennbar sein, unabhängig davon, wie die Beacons der drei unsynchronisierten Access Points AP1 bis AP3 gegeneinander verschoben sind, weil der Beacon-Abstand bei allen Access-Points jeweils 10,24 ms beträgt.

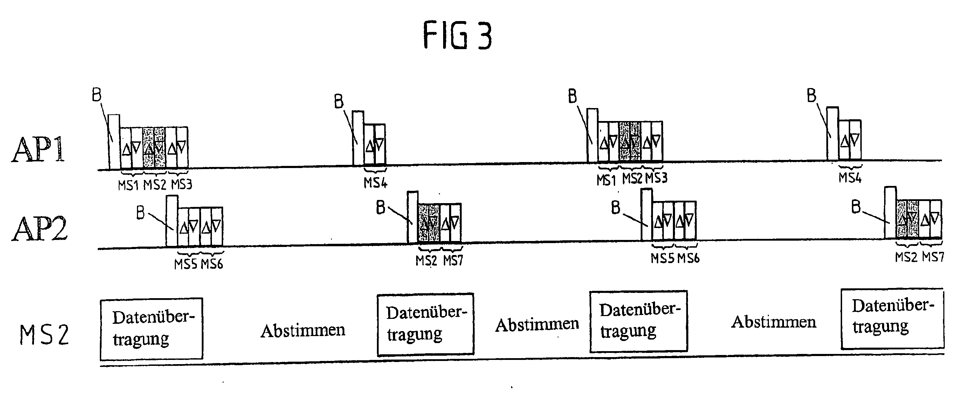

Wenn sich - wie bereits oben im Zusammenhang mit der Figur 1 erwähnt - beispielsweise die Signalqualität bei der Datenverbindung zwischen der Mobilstation MS2 und dem Access-Point AP1 verringert, so scannt die Mobilstation MS2 die Luftschnittstelle bei verschiedenen Frequenzen nach vorhandenen Access Points ab. Wird dabei beispielsweise festgestellt, dass der Access-Point AP2 für einen Hand-Over-Vorgang geeignet ist, so wird die Mobilstation MS2 mit dem neuen Access-Point AP2 eine parallele Datenverbindung aufbauen. Dies zeigt die Figur 3 im Detail.

Wie sich in der Figur 3 erkennen lässt, ist die Zuordnung zum "geraden" oder "ungeraden" Beacon auf der neuen Frequenz des neuen Acccess Points AP2 so gewählt, dass tatsächlich zwei parallele Datenströme möglich sind; dies bedeutet beispielsweise, dass die Mobilstation MS2 eine "ungerade" Übertragungsphase bezüglich des neuen Acccess Points AP2 wählen muss, wenn sie in einer "geraden" Übertragungsphase bezüglich des alten, ursprünglichen Acccess Points AP1 steht. In der Hand-Over-Phase überträgt die Mobilstation MS2 im Schnitt alle 10,24 ms Daten, welche abwechselnd an den alten und den neuen Acccess Point gerichtet sind.

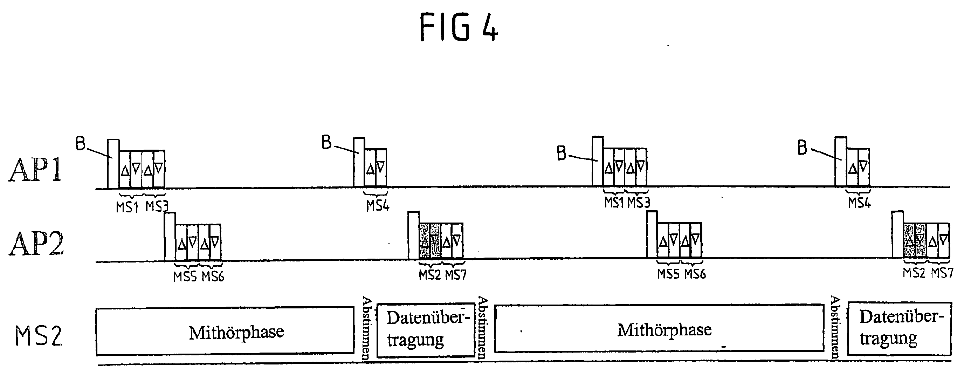

Sobald der Aufbau der parallelen Datenverbindung abgeschlossen ist, wird die Verbindung zu dem ursprünglichen Access Point AP1 abgebrochen; dies zeigt die Figur 4.

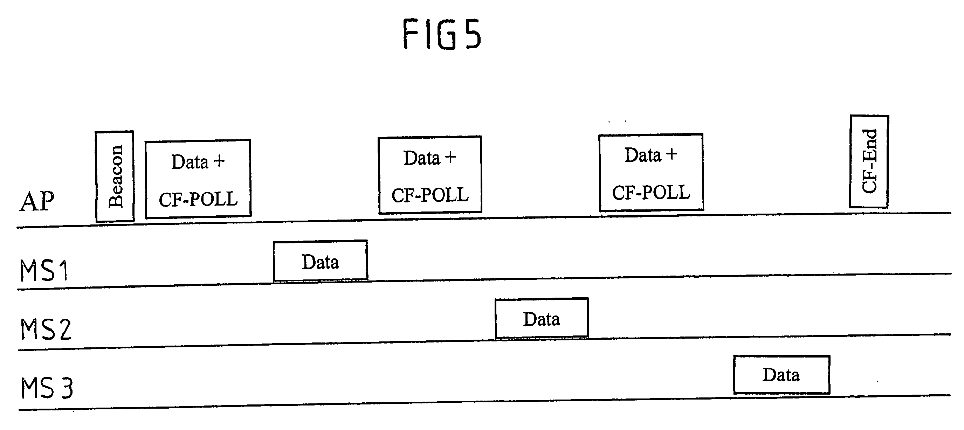

In der Figur 5 ist zum besseren Verständnis nochmals die Datenverbindung zwischen dem Access Point AP1 und den drei Mobilstationen MS1 bis M3 in der "ersten" Übertragungsphase gemäß der Figur 2 dargestellt. Man erkennt, dass der Access Point AP1 zunächst Datenpakete zur Mobilsstation MS1 übermittelt. Sobald dieser Vorgang abgeschlossen ist, werden durch ein Signal CF-Poll Datenpakete der Mobilstation MS1 angefordert. Nachfolgend wird dieser Vorgang des Sendens und "Anforderns" von Datenpaketen mit den Mobilstationen MS2 und MS3 wiederholt. Die "Contention-free-Periode" kann beispielsweise durch ein Contention-free-Ende-Signal CF-End beendet werden.

## Patentansprüche

1. Verfahren zum Betreiben einer Datenverbindung zwischen einer Basisstation (AP1) und einer oder mehreren Mobilstationen (MS1 bis MS4), bei dem
- innerhalb von Übertragungsphasen (U) Datenpakete zwischen der Basisstation (AP1) und der Mobilstation übertragen werden und
- jeweils durch Abgabe eines Startsignales (B) der Beginn jeder Übertragungsphase (U) angezeigt und die insbesondere als Luftschnittstelle ausgestaltete Übertragungsschnittstelle zwischen der Basisstation (AP1) und der Mobilstation (MS1 bis MS4) für die jeweilige Übertragungsphase (U) durch die Basisstation (AP1) verwaltet wird,
- die Mobilstation (MS2) zur Vorbereitung eines Hand-Over-Vorgangs in eine Mithörphase (M) schaltet, in der der Funkverkehr abgehört wird und nach einer zur Datenpaketübertragung geeigneten, anderen Basisstation (AP2) gesucht wird,
**dadurch gekennzeichnet,**
**dass** die Mobilstation (MS1 bis MS4)
- eine Datenpaketübertragung ausschließlich in jeder m-ten Übertragungsphase durchführt, wobei "m" eine natürliche Zahl größer als "1" bezeichnet, und
- nach erfolgter Datenpaketübertragung für zumindest eine nachfolgende Übertragungsphase von der Datenpaketübertragung ausgelassen wird.

2. Verfahren nach Anspruch 1, **dadurch gekennzeichnet, dass** die Mithörphase außerhalb der zur Datenpaketübertragung mit der Basisstation genutzten Übertragungsphasen liegt.

3. Verfahren nach Anspruch 1 oder 2, **dadurch gekennzeichnet, dass** die Mithörphase mindestens eine von der Datenpaketübertragung mit der Basisstation ausgelassene Übertragungsphase zumindest teilweise einschließt.

4. Verfahren nach einem der voranstehenden Ansprüche, **dadurch gekennzeichnet, dass**
- die beiden Basisstationen (AP1, AP2) mit unterschiedlichen Übertragungsfrequenzen arbeiten und die Beacon-Signale (B) der beiden Basisstationen (AP1, AP2) zueinander asynchron sind.

5. Verfahren nach einem der voranstehenden Ansprüche, **dadurch gekennzeichnet, dass**
- die Beacon-Signale (B) der beiden Basisstationen (AP1, AP2) jeweils äquidistant erzeugt werden.

6. Verfahren nach einem der voranstehenden Ansprüche, **dadurch gekennzeichnet, dass** jede Mobilstation (MS1 bis MS11) eine Datenpaketübertragung ausschließlich in jeder zweiten Übertragungsphase durchführt.

7. Verfahren nach einem der voranstehenden Ansprüche, **dadurch gekennzeichnet, dass** die Mobilstationen im Falle des Vorhandenseins einer geeigneten anderen Basisstation zur Vorbereitung des Hand-Over-Vorgangs eine parallele Verbindung mit der anderen Basisstation (AP2) aufbauen, wobei für die parallele Verbindung Zeitfenster genutzt werden, die außerhalb der zur Datenpaketübermittlung mit der ursprünglichen Basisstation genutzten Übertragungsphasen (U) liegen.

8. Verfahren nach Anspruch 7, **dadurch gekennzeichnet, dass** die für die parallele Verbindung genutzten Zeitfenster diejenigen Übertragungsphasen (U) einschließen, die bezüglich der ursprünglichen Basisstation ausgelassen werden.

9. Verfahren nach einem der Ansprüche 7 und 8, **dadurch gekennzeichnet, dass** nach erfolgtem Verbindungsaufbau mit der anderen Basisstation (AP2) die parallele Verbindung mit der ursprünglichen Basisstation (AP1) beendet wird.

10. Verfahren nach einem der voranstehenden Ansprüche, **dadurch gekennzeichnet, dass** die Zuordnung der Mobilstationen zu den Übertragungsphasen, die zur Datenpaketübertragung mit der jeweiligen Basisstation genutzt werden, gleichmäßig erfolgt.

11. Verfahren nach einem der voranstehenden Ansprüche, **dadurch gekennzeichnet, dass** die Datenpaketübertragung in einem WLAN-Standard erfolgt und die Basisstation durch einen WLAN-Access-Point gebildet wird.

12. Verfahren nach einem der voranstehenden Ansprüche, **dadurch gekennzeichnet, dass** durch die Abgabe des Beacon-Signales (B) die Luftschnittstelle für den jeweiligen Frequenzbereich jeweils unter Bildung einer Contention-free-Periode (U) belegt wird.

13. Verfahren nach einem der voranstehenden Ansprüche, **dadurch gekennzeichnet, dass** das Ende jeder Übertragungsphase jeweils durch die Abgabe eines Contention-free-Ende-Signales (CF-END) von der Basisstation angezeigt wird.

14. Verfahren nach einem der voranstehenden Ansprüche, **dadurch gekennzeichnet, dass** zwischen den Übertragungsphasen die Luftschnittstelle im jeweiligen Frequenzbereich für Contention-Perioden (F) freigegeben wird.

15. Verfahren nach einem der voranstehenden Ansprüche, **dadurch gekennzeichnet, dass** der zeitliche Abstand (BA) zwischen zwei aufeinanderfolgenden Beacon-Signalen (B) mindestens doppelt so groß wie die Länge der jeweils dazwischen liegenden Contention-free-Periode (U) gewählt wird.

16. Verfahren nach einem der voranstehenden Ansprüche, **dadurch gekennzeichnet, dass** die zeitliche Länge der Mithörphase (M) der Mobilstationen mindestens das 1,5-fache des zeitlichen Abstands (BA) zwischen zwei aufeinanderfolgenden Beacon-Signalen (B) beträgt.

17. Verfahren nach einem der voranstehenden Ansprüche, **dadurch gekennzeichnet, dass** die Datenpakete mit realzeitkritischen Datenströmen gebildet und im Rahmen der Datenpaketübertragung übertragen werden.

18. Verfahren nach einem der voranstehenden Ansprüche, **dadurch gekennzeichnet, dass** der zeitliche Abstand zwischen zwei Beacon-Signalen zwischen 5ms und 15ms beträgt.

19. Basisstation (AP2) zum Betreiben einer Datenverbindung zwischen einer Basisstation und einer oder mehreren Mobilstationen, wobei die Basisstation eine Basisstation-Steuereinrichtung aufweist, die derart ausgestaltet ist, dass sie innerhalb von Übertragungsphasen Datenpakete mit den Mobilstationen austauscht,
**dadurch gekennzeichnet,**
**dass** die Basisstation derart ausgebildet ist, dass sie den Mobilstationen die Übertragungsphasen derart zuordnet, dass jede Mobilstation eine Datenpaketübertragung ausschließlich in jeder m-ten Übertragungsphase durchführt, wobei "m" eine natürliche Zahl größer als "1" bezeichnet, und nach erfolgter Datenpaketübertragung jeweils für zumindest eine nachfolgende Übertragungsphase von der Datenpaketübertragung ausgeschlossen bleibt.

20. Mobilstation (MS2) zum Betreiben einer Datenverbindung mit einer Basisstation, wobei die Mobilstation eine Mobilstation-Steuereinrichtung aufweist, die derart ausgestaltet ist, dass sie
- innerhalb von Übertragungsphasen Datenpakete mit der Basisstation austauscht, und
- außerhalb der zur Datenpaketübertragung mit der Basisstation genutzten Übertragungsphasen zur Vorbereitung eines Hand-Over-Vorgangs in eine Mithörphase schaltet, in der der Funkverkehr abgehört wird und nach einer zur Datenpaketübertragung geeigneten, anderen Basisstation gesucht wird,
**dadurch gekennzeichnet,**
**dass** die Mobilstation-Steuereinrichtung derart ausgebildet ist, dass sie
- eine Datenpaketübertragung ausschließlich in jeder m-ten Übertragungsphase durchführt, wobei "m" eine natürliche Zahl größer als "1" bezeichnet, und
- nach erfolgter Datenpaketübertragung jeweils zumindest eine nachfolgende Übertragungsphase zur Datenpaketübertragung auslässt.

## Claims

1. Process for the operation of a data link between a base station (AP1) and one or several mobile stations (MS1 to MS4), wherein
- within transmission phases (U) data packets are transmitted between the base station (AP1) and the mobile station and
- each time through emission of a start signal (B), the start of each transmission phase (U) is indicated and the transmission interface in particular configured as air interface between the base station (AP1) and the mobile station (MS1 to MS4) for the transmission phase in question (U) is managed by the base station (AP1),
- for preparation of a handover procedure the mobile station (MS2) switches into a monitoring phase (M), wherein the radio traffic is listened to and another base station (AP2) suitable for the data packet transmission is sought,
**characterised in that**
the mobile station (MS1 to MS4)
- performs data packet transmission exclusively in every m^{th} transmission phase, "m" designating a natural number greater than "1", and
- after data packet transmission has been effected, is omitted from the data packet transmission for at least one subsequent transmission phase.

2. Process according to claim 1, **characterised in that** the monitoring phase lies outside the transmission phases used for the data packet transmission with the base station.

3. Process according to either claim 1 or claim 2, **characterised in that** the monitoring phase at least partly includes at least one transmission phase omitted from the data packet transmission with the base station.

4. Process according to any one of the foregoing claims, **characterised in that**
- the two base stations (AP1, AP2) operate with different transmission frequencies and the beacon signals (B) of both base stations (AP1, AP2) are mutually asynchronous.

5. Process according to any one of the foregoing claims, **characterised in that**
- the beacon signals (B) of the two base stations (AP1, AP2) are made equidistant each time.

6. Process according to any one of the foregoing claims, **characterised in that** each mobile station (MS1 to MS11) effects a data packet transmission exclusively in every second transmission phase.

7. Process according to any one of the foregoing claims, **characterised in that** in the event of the availability of a suitable other base station for preparation of the handover procedure, the mobile stations set up a parallel link with the other base station (AP2), wherein time windows which lie outside the transmission phases (U) used for the data packet transfer with the original base station are used for the parallel link.

8. Process according to claim 7, **characterised in that** the time windows used for the parallel link include those transmission phases (U) which are omitted in relation to the original base station.

9. Process according to either claim 7 or claim 8, **characterised in that** after a link with the other base station (AP2) has been set up the parallel link with the original base station (AP1) is ended.

10. Process according to any one of the foregoing claims, **characterised in that** the assignment of the mobile stations to the transmission phases which are used for the data packet transmission with the base station in question is effected evenly.

11. Process according to any one of the foregoing claims, **characterised in that** the data packet transmission takes place under a WLAN standard and the base station is constituted by a WLAN access point.

12. Process according to any one of the foregoing claims, **characterised in that** through the emission of the beacon signal (B) the air interface for the frequency range in question is reserved each time with the creation of a contention-free period (U).

13. Process according to any one of the foregoing claims, **characterised in that** the end of each transmission phase is indicated each time by the emission of a contention-free end signal (CF-END) by the base station.

14. Process according to any one of the foregoing claims, **characterised in that** between the transmission phases the air interface in the frequency range in question is released for contention periods (F).

15. Process according to any one of the foregoing claims, **characterised in that** the time interval (BA) between two consecutive beacon signals (B) is selected to be at least twice as large as the length of the contention-free periods (U) lying between them each time.

16. Process according to any one of the foregoing claims, **characterised in that** the duration of the monitoring phase (M) of the mobile stations is at least 1.5 times the time interval (BA) between two consecutive beacon signals (B).

17. Process according to any one of the foregoing claims, **characterised in that** the data packets are formed with real-time critical data streams and are transmitted in the course of the data packet transmission.

18. Process according to any one of the foregoing claims, **characterised in that** the time interval between two beacon signals is between 5 ms and 15 ms.

19. Base station (AP2) for the operation of a data link between a base station and one or several mobile stations, wherein the base station has a base station control device which is configured such that it exchanges data packets with the mobile stations within transmission phases
**characterised in that**
the base station is constructed in such a way that it assigns the transmission phases to the mobile stations in such a manner that each mobile station performs data packet transmission exclusively in every m^{th} transmission phase, "m" designating a natural number greater than "1", and each time after data packet transmission has been effected each mobile station remains excluded from the data packet transmission for at least one following transmission phase.

20. Mobile station (MS2) for the operation of a data link with a base station, wherein the mobile station has a mobile station control device which is configured such that
- it exchanges data packets with the base station within transmission phases, and
- outside the transmission phases used for the data packet transmission with the base station it switches for the preparation of a handover procedure into a monitoring phase in which the radio traffic is listened to, and another base station suitable for the data packet transmission is sought,
**characterised in that**
the mobile station control device is constructed in such a way that it
- performs data packet transmission exclusively in every m^{th} transmission phase, "m" designating a natural number greater than "1", and
- each time after data packet transmission has been effected, omits at least one subsequent transmission phase for data packet transmission.

## Revendications

1. Procédé permettant de faire fonctionner une liaison de données entre une station de base (AP1) et une ou plusieurs stations mobiles (MS1 à MS4), dans le cadre duquel
- durant des phases de transmission (U), des paquets de données sont transmis entre la station de base (AP1) et la station mobile et
- respectivement, le début de chaque phase de transmission (U) est indiqué par l'émission d'un signal de départ (B) et l'interface de transmission configurée en particulier comme une interface radio entre la station de base (AP1) et la station mobile (MS1 à MS4) est administré par la station de base (AP1) pour la phase de transmission (U) respective,
- la station mobile (MS2) commute dans une phase d'écoute (M) pour la préparation d'un processus de transfert, dans laquelle la radiocommunication est écoutée et sollicitée par une autre station de base (AP2) adaptée à la transmission de paquets de données,
**caractérisé en ce que**
la station mobile (MS 1 à MS4)
- effectue une transmission de paquets de données exclusivement lors de chaque m^{ième} phase de transmission, « m » désignant un nombre naturel supérieur à « 1 », et
- est omise de la transmission des paquets de données après une transmission de paquets de données réussie pour au moins une phase de transmission subséquente.

2. Procédé selon la revendication 1, **caractérisé en ce que** la phase d'écoute se trouve hors des phases de transmissions utilisées pour la transmission de paquets de données avec la station de base.

3. Procédé selon la revendication 1 ou 2, **caractérisé en ce que** la phase d'écoute inclut au moins partiellement au moins une phase de transmission omise par la transmission de paquets de données avec la station de base.

4. Procédé selon l'une quelconque des revendications précédentes, **caractérisé en ce que**
- les deux stations de base (AP1, AP2) fonctionnent avec des fréquences de transmission différentes, et **en ce que** les signaux de balise (B) des deux stations de base (AP1, AP2) sont asynchrones l'un par rapport à l'autre.

5. Procédé selon l'une quelconque des revendications précédentes, **caractérisé en ce que**
- les signaux de balise (B) des deux stations de base (AP1, AP2) sont générés respectivement de manière équidistante.

6. Procédé selon l'une quelconque des revendications précédentes, **caractérisé en ce que** chaque station mobile (MS 1 à MS 11) effectue une transmission de paquets de données exclusivement dans une phase de transmission sur deux.

7. Procédé selon l'une quelconque des revendications précédentes, **caractérisé en ce que** les stations mobiles, en cas de l'existence d'une autre station de base adaptée à la préparation d'un processus de transfert, établissent une liaison parallèle avec l'autre station de base (AP2), des fenêtres temporelles se trouvant hors des phases de transmission (U) utilisées pour la transmission des paquets de données avec la station de base d'origine étant utilisées pour la liaison parallèle.

8. Procédé selon la revendication 7, **caractérisé en ce que** les fenêtres temporelles utilisées pour la liaison parallèle incluent les phases de transmission (U) qui ont été omises concernant la station de base d'origine.

9. Procédé selon l'une quelconque des revendications 7 et 8, **caractérisé en ce qu'**après l'établissement réussi de la liaison avec l'autre station de base (AP2), la liaison parallèle avec la station de base d'origine (AP1) est terminée.

10. Procédé selon l'une quelconque des revendications précédentes, **caractérisé en ce que** l'affectation des stations mobiles aux phases de transmission qui sont utilisées pour la transmission de paquets de données avec la station de base respective se produit de manière égale.

11. Procédé selon l'une quelconque des revendications précédentes, **caractérisé en ce que** la transmission de paquets de données a lieu dans une norme WLAN et la station de base est constituée au moyen d'un point d'accès WLAN.

12. Procédé selon l'une quelconque des revendications précédentes, **caractérisé en ce qu'**au moyen de l'émission du signal de balise (B), l'interface radio pour la plage de fréquences respective est occupée respectivement par la formation d'une période sans collision (U).

13. Procédé selon l'une quelconque des revendications précédentes, **caractérisé en ce que** la fin de chaque phase de transmission est indiquée respectivement par l'émission d'un signal de fin sans collision (CF-END) par la station de base.

14. Procédé selon l'une quelconque des revendications précédentes, **caractérisé en ce qu'**entre les phases de transmission, l'interface radio est libérée dans la plage de fréquences respective pour les périodes de collision (F).

15. Procédé selon l'une quelconque des revendications précédentes, **caractérisé en ce que** l'intervalle de temps (BA) entre deux signaux de balise (B) se suivant l'un après l'autre est choisi au moins deux fois supérieur à la durée de la période sans collision (U) respective se situant entre les deux.

16. Procédé selon l'une quelconque des revendications précédentes, **caractérisé en ce que** la durée de la phase d'écoute (M) de la station mobile est d'au moins 1,5 fois l'intervalle de temps (BA) entre deux signaux de balise (B) se suivant l'un après l'autre.

17. Procédé selon l'une quelconque des revendications précédentes, **caractérisé en ce que** les paquets de données sont formés par des flux de données critiques en temps réel et sont transmis dans la cadre de la transmission de paquets de données.

18. Procédé selon l'une quelconque des revendications précédentes, **caractérisé en ce que** l'intervalle de temps entre deux signaux de balise se situe entre 5 ms et 15 ms.

19. Station de base (AP2) permettant de faire fonctionner une liaison de données entre une station de base et une ou plusieurs stations mobiles, la station de base présentant un dispositif de contrôle de la station de base qui est configuré de telle sorte qu'il échange des paquets de données avec les stations mobiles durant les phases de transmission,
**caractérisé en ce que**
la station de base est constituée de telle sorte qu'elle affecte les phases de transmission aux stations mobiles de manière à ce que chaque station mobile effectue une transmission de données exclusivement à chaque m^{ième} phase de transmission, « m » désignant un nombre naturel supérieur à « 1 », et à la suite d'une transmission de paquets de données réussie respectivement pour au moins une phase de transmission suivante, elle reste exclue de la transmission de paquets de données.

20. Station mobile (MS2) permettant de faire fonctionner une liaison de données avec une station de base, la station mobile présentant un dispositif de contrôle de la station mobile configuré de telle sorte que
- pendant les phases de transmission, il échange des paquets de données avec la station de base, et
- hors des phases de transmission utilisées pour la transmission de données avec la station de base, il commute dans une phase d'écoute pour la préparation d'un processus de transfert, dans laquelle la radiocommunication est écoutée et sollicitée par une autre station de base adaptée à la transmission de paquets de données,
**caractérisé en ce que**
le dispositif de contrôle de la station mobile est configuré de telle sorte
- qu'il effectue une transmission de paquets de données exclusivement à chaque m^{ième} phase de transmission, « m » désignant un nombre naturel supérieur à « 1 », et
- à la suite d'une transmission de données réussie, qu'il omette respectivement au moins une phase de transmission suivante pour la transmission de paquets de données.
